# FASCICULE DE BREVET EUROPEEN

(11) **EP 2 000 333 B1**
(45) Date de publication et mention de la délivrance du brevet: **11.01.2012**
(21) Numéro de dépôt: 08290518.3
(22) Date de dépôt: 05.06.2008
(51) Int. Cl.: B60C 23/04

(54) **Atterrisseur équipé d'un dispositif de communication entre une roue et l'atterrisseur**
Fahrwerk, das mit einer Kommunikationsvorrichtung zwischen einem Rad und dem Fahrwerk ausgestattet ist
Landing gear equipped with a device for communication between a wheel and the landing gear

(30) Priorité: 07.06.2007 FR 0704089
(43) Date de publication de la demande: 10.12.2008
(73) Titulaire: SAGEM Défense Sécurité, 75015 Paris (FR)
(72) Inventeur: Pradier, Jean-Clair, 78800 Houilles (FR); Lavaud, Thomas, 92190 Meudon (FR)
(74) Mandataire: Parzy, Benjamin Alain

(56) Documents cités:
- EP-A- 1 790 503
- WO-A-02/096681
- FR-A- 2 809 674

## Description

L'invention concerne un atterrisseur équipé d'un dispositif de communication entre une roue portée par l'atterrisseur et l'atterrisseur.

### ARRIERE-PLAN DE L'INVENTION

On connaît des atterrisseurs d'aéronef comportant au moins un essieu sur lequel au moins une roue est montée pour tourner, l'atterrisseur comportant un dispositif de communication pour relier un capteur monté sur une jante de la roue à des moyens de traitement fixes montés sur l'aéronef. Pour ce faire les moyens de traitement sont reliés à une antenne fixe disposée en extrémité de l'essieu, tandis que le capteur comporte une antenne ce qui permet au capteur de communiquer par voie Hertzienne sans contact avec l'antenne fixe. Cependant, l'extrémité de l'essieu est en général protégée par un capot métallique solidaire de la roue. Pour que les deux antennes communiquent, il convient d'équiper le capot d'un élément intermédiaire passif qui comporte un élément radiatif en regard de l'antenne fixe et un élément radiatif en regard de l'antenne du capteur.

Le document EP 1 790 503 divulgue un tel atterrisseur équipé d'antennes et en accord avec la revendication 1.

En général, l'antenne fixe s'étend tout autour de l'extrémité de l'essieu, et l'élément radiatif est circulaire et disposé en regard de l'antenne fixe dans l'axe de la roue, de sorte que l'antenne fixe et l'élément radiatif en regard ont une interaction électromagnétique qui ne dépend pas de la position angulaire de la roue. L'ensemble du rayonnement de l'antenne fixe influence l'élément radiatif en regard.

### OBJET DE L'INVENTION

L'invention a pour objet un atterrisseur avec un dispositif simplifié de communication entre le capteur et l'antenne fixe.

### BREVE DESCRIPTION DE L'INVENTION

Selon l'invention, on propose un atterrisseur d'aéronef comportant au moins un essieu sur lequel au moins une roue est montée pour tourner, l'atterrisseur comportant un dispositif de communication pour relier un capteur monté sur une jante de la roue à des moyens de traitement fixes montés sur l'aéronef. Selon l'invention, le dispositif de communication comporte d'une part une antenne solidaire du capteur et donc tournant avec la roue, et d'autre part une antenne fixe s'étendant en bout d'essieu et reliée aux moyens de traitement, les deux antennes étant en communication hertzienne au travers d'un capot en matériau non-conducteur solidaire de la roue et recouvrant l'extrémité de l'essieu.

Ainsi, le capot est transparent aux ondes électromagnétiques utilisées et les antennes sont directement en communication sans qu'il soit besoin d'utiliser un élément passif intermédiaire traversant le capot. Le dispositif de communication s'en trouve notablement simplifié et allégé.

Bien sûr, l'antenne fixe doit rayonner dans toutes les directions radiales, puisque l'information du capteur doit pouvoir être transmise quelque soit la position angulaire de la roue. Une telle disposition implique donc que seule la partie de ce rayonnement qui atteint le capteur soit captée par l'antenne du capteur. Cependant, un tel capteur peut fonctionner avec une énergie captée très faible. Ainsi, bien qu'a priori moins favorable du point de vue électromagnétique que le dispositif de l'art antérieur, le dispositif de l'invention est néanmoins avantageux en ce qu'il est notablement plus simple que les dispositifs connus.

De préférence, l'antenne fixe comprend une pluralité d'éléments rayonnants plats imprimés disposés tout autour de l'extrémité de l'essieu de sorte que l'antenne du capteur soit en permanence en relation hertzienne avec l'un au moins des éléments rayonnants quelque soit la position angulaire de la roue.

Ces éléments rayonnants plats imprimés sont particulièrement simples à mettre en oeuvre et contribuent à diminuer notablement le coût du dispositif de communication.

### BREVE DESCRIPTION DES DESSINS

L'invention sera mieux comprise à la lumière de la description qui suit en référence aux figures des dessins annexés parmi lesquelles .

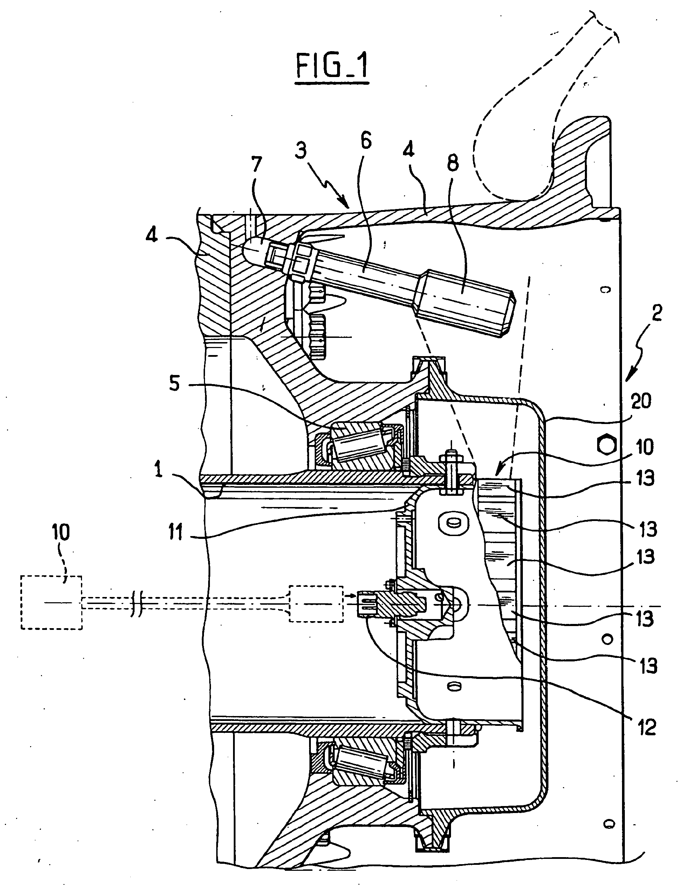

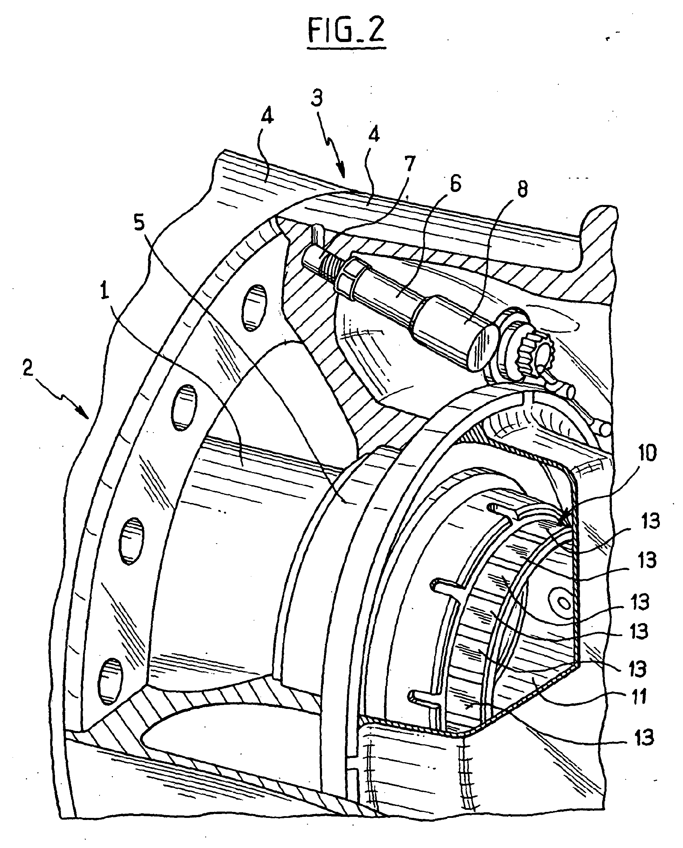

- la figure 1 est une vue en coupe longitudinale partielle d'une partie basse d'atterrisseur illustrant une roue montée sur un essieu de l'atterrisseur et équipée d'un dispositif de communication selon un mode particulier de réalisation de l'invention;
- la figure est une vue en perspective partiellement écorchée de l'atterrisseur illustré à la figure 1.

### DESCRIPTION DETAILLEE DE L'INVENTION

En référence aux figures, l'atterrisseur comporte un essieu 1 dont on distingue ici l'extrémité qui porte une roue 2. De façon connue en soi, la roue 2 comporte une jante 3 constituée de deux demi-jantes 4 recevant un pneumatique (esquissé en pointillés). La jante 3 est reçue à rotation par l'intermédiaire ici de roulements à rouleaux coniques 5 (un seul roulement est visible). Sur l'une des demi-jantes est installé un capteur de pression 6 vissé dans un orifice 7 qui débouche dans le pneumatique pour mesurer la pression qui règne à l'intérieur de ce dernier. Le capteur est équipé d'une antenne 8 à son extrémité libre. Le capteur de pression 6 ne comporte aucune source d'énergie.

L'essieu 1 porte à son extrémité une antenne fixe 10 qui s'étend autour de l'essieu. Ici, l'antenne fixe 10 est montée sur un bouchon 11 introduit dans l'essieu et qui porte un connecteur 12 pour connecter l'antenne 10 à des moyens de traitement 100 montés sur l'aéronef. Selon un mode de réalisation préféré, l'antenne fixe 10 comporte une pluralité d'éléments rayonnants imprimés 13 disposés de sorte que ceux-ci s'étendent sur toute la circonférence du bouchon 11, immédiatement à l'extérieur de l'essieu 1. Ces éléments rayonnants 13 (aussi appelés antennes « patch ») sont connus en soi et permettent de rayonner des signaux haute-fréquence.

L'extrémité de l'essieu 1 est protégé par un capot 20 solidaire de la jante 3 et tournant donc avec cette dernière. Le capot 20 est réalisé dans un matériau non conducteur et transparent aux ondes électromagnétiques utilisées pour la communication entre l'antenne fixe 10 et l'antenne 8 du capteur de pression 6. Par exemple, le capot pourra être réalisé en matière plastique non conductrice.

Le fonctionnement du dispositif est le suivant : lorsque la pression du pneumatique doit être mesurée, un courant est envoyé à l'antenne fixe 10. Chacun des éléments rayonnants 13 rayonne alors une onde électromagnétique qui se propage au travers du capot, de sorte qu'une partie de cette onde rayonnée atteint l'antenne 8 du capteur de pression 6. L'onde est convertie par l'antenne 8 en courant qui alimente le capteur de pression 6, qui effectue la mesure de pression. Les données de pression sont alors renvoyées par onde hertzienne vers l'antenne fixe 10 pour être transmises aux moyens de traitement 100.

Avantageusement, on disposera les éléments rayonnants assez proches les uns des autres de sorte que, dans une zone angulaire s'étendant entre deux éléments rayonnants 13 adjacents, la somme des champ rayonnés par ces deux éléments rayonnants soit à peu près constante, ce qui permet d'assurer une efficacité satisfaisante de la communication entre l'antenne fixe et l'antenne du capteur quelle que soit la position angulaire de la roue.

L'invention n'est pas limitée à ce qui vient d'être décrit, mais bien au contraire englobe toute variante entrant dans le cadre défini par les revendications.

En particulier, bien que l'on ait indiqué que l'antenne fixe comporte ici des éléments plats rayonnants, on pourra utiliser d'autres types d'antenne, par exemple une antenne formée d'un enroulement de fil rayonnant. En outre, bien que l'on ait indiqué que l'antenne fixe est portée par un bouchon rapporté sur l'extrémité de l'essieu, on pourra également placer l'antenne fixe directement sur l'extrémité de l'essieu. Dans les deux cas, il importe que l'antenne s'étende en bout d'essieu pour pouvoir communiquer avec l'antenne du capteur. On a sur la figure 1 figuré symboliquement en pointillés la plage de rayonnement de l'antenne fixe. On voit que l'antenne du capteur s'étend dans cette plage. On peut également compter sur la réflexion de l'onde générée par l'une des antennes sur la face interne de la jante pour revenir vers l'autre antenne.

## Revendications

1. Atterrisseur d'aéronef comportant au moins un essieu (1) sur lequel au moins une roue (2) est montée pour tourner, l'atterrisseur comportant un dispositif de communication pour relier un capteur (6) monté sur une jante (3) de la roue à des moyens de traitement fixes montés sur l'aéronef, **caractérisé en ce que** le dispositif de communication comporte d'une part une antenne (8) solidaire du capteur et donc tournant avec la roue et d'autre part une antenne fixe (10) s'étendant en bout d'essieu et reliée aux moyens de traitement, les deux antennes étant en communication hertzienne au travers d'un capot (20) en matériau non-conducteur solidaire de la roue et recouvrant l'extrémité de l'essieu.

2. Atterrisseur selon la revendication 1, dans laquelle l'antenne fixe comprend une pluralité d'éléments rayonnants plats imprimés (13) disposés circonférentiellement de sorte que l'antenne (8) du capteur (6) soit en permanence en relation hertzienne avec l'un au moins des éléments rayonnants quelque soit la position angulaire de la roue.

## Claims

1. An aircraft undercarriage including at least one axle (1) having at least one wheel (2) mounted to rotate thereon, the undercarriage including a communication device for connecting a sensor (6) mounted on a rim (3) of the wheel to stationary processor means mounted on the aircraft, the undercarriage being **characterized in that** the communication device comprises firstly an antenna (8) secured to the sensor and thus rotating together with the wheel, and secondly a stationary antenna (10) extending at the end of the axle and connected to the processor means, the two antennas being in radio communication through a cover (20) of non-conductive material secured to the wheel and covering the end of the axle.

2. An undercarriage according to claim 1, in which the stationary antenna comprises a plurality of printed flat radiating elements (13) disposed circumferentially in such a manner that the antenna (8) of the sensor (6) is continuously in radio connection with at least one of the radiating elements, regardless of the angular position of the wheel.

## Patentansprüche

1. Flugzeug-Fahrwerk, umfassend mindestens eine Radachse (1), an der mindestens ein Rad (2) drehbar gelagert ist, wobei das Fahrwerk eine Kommunikationsvorrichtung umfasst, die dazu bestimmt ist, einen an einer Felge (3) des Rades montierten Sensor (6) mit ortsfesten, an dem Flugzeug montierten Verarbeitungsmitteln zu verbinden, **dadurch gekennzeichnet, dass** die Kommunikationsvorrichtung einerseits eine Antenne (8) umfasst, die fest mit dem Sensor verbunden ist und sich demzufolge mit dem Rad dreht, sowie andererseits eine ortsfeste Antenne (10), die sich am Ende der Radachse erstreckt und mit den Verarbeitungsmitteln verbunden ist, wobei die beiden Antennen durch eine fest mit dem Rad verbundene, das Ende der Radachse abdeckende Kappe (20) aus nichtleitendem Material hindurch in Funkverbindung stehen.

2. Fahrwerk nach Anspruch 1, wobei die ortsfeste Antenne eine Vielzahl von flachen gedruckten strahlenden Elementen (13) umfasst, die derart in Umfangsrichtung angeordnet sind, dass die Antenne (8) des Sensors (6) unabhängig von der Winkelposition des Rades ständig in Funkverbindung mit mindestens einem der strahlenden Elemente steht.
